## Europäisches Patentamt
## European Patent Office
## Office européen des brevets

(11) Publication number: **0 216 821**
**B1**

(12) # EUROPEAN PATENT SPECIFICATION

(45) Date of publication of the patent specification:
27.09.89

(51) Int. Cl.⁴: **H 02 M 3/335**

(21) Application number: **86901687.3**

(22) Date of filing: **24.02.86**

(86) International application number:
**PCT/US 86/00381**

(87) International publication number:
**WO 86/05333 (12.09.86** Gazette 86/20)

(54) **DC TO DC CONVERTER.**

(30) Priority: **01.03.85 US 707289**

(43) Date of publication of application:
**08.04.87 Bulletin 87/15**

(45) Publication of the grant of the patent:
**27.09.89 Bulletin 89/39**

(84) Designated Contracting States:
**DE FR GB**

(56) References cited:
**US-A- 3 742 330**
**US-A- 4 479 175**

**Patents Abstracts of Japan, vol. 7, no. 226, 7 October 1983, page (E-202)(1371) & JP - A - 58116066**

(73) Proprietor: **NCR Corporation, World Headquarters, Dayton, Ohio 45479 (US)**

(72) Inventor: **RHOADS, Paul, Martin, 5603 Bobby Jones Road, Orlando, FL 32808 (US)**
Inventor: **RENKES, Arthur, Herbert, 1530 Arden Street, Longwood, FL 32750 (US)**

(74) Representative: **Robinson, Robert George, International Patent Department NCR Limited 206 Marylebone Road, London NW1 6LY (GB)**

ACTORUM AG

## Description

### Technical Field

This invention relates to DC to DC converters

### Background Art

In the art of DC to DC converters, it is known from U.S. Patent No. 4 268 898 to employ a tertiary winding in the primary of a converter transformer, which winding allows the core flux to be reset by clamping the winding back to the primary voltage. A difficulty associated with that form of operation is that the tertiary voltage must rise considerably above the DC input voltage, which means that a transistor having a higher voltage breakdown, approximately twice the input voltage, is required.

From U.S. Patent No. 4 443 840 there is known a DC to DC converter in which two switching transistors are connected to opposite ends of the series combination of plurality of primary windings of a converter transformer. With this known arrangement separate drive transformers are used to drive the two switching transistors.

### Summary of the Invention

It is an object of the present invention to provide an inexpensive DC to DC converter of the type employing two electronic switches with a converter transformer, which converter eliminates the need for separate drive means for the two switches and also eliminates the need for a high voltage type electronic switch.

According to the invention, there is provided a DC to DC converter including a transformer having a primary winding and a secondary winding, said primary winding having a first end, a second end and a tap so as to form a first primary section between said first end and said tap and a second primary section between said second end and said tap, a DC power supply having a first output side and a second output side, and first electronic switch means responsive to a control signal for periodically connecting said second end of said primary winding to said second output side of said power supply, charactrized by second electronic switch means for periodically connecting said tap to said first output side of said power supply, control means connected across said first primary section for periodically activating said second switch means in response to the potential developed across said first primary section, said second primary section having a number of winding turns substantially greater than the number of winding turns of said first primary section, first rectifying means serving to clamp said second end of said primary winding to said first output side of said power supply, and second rectifying means serving to clamp said tap to said second output side of said power supply.

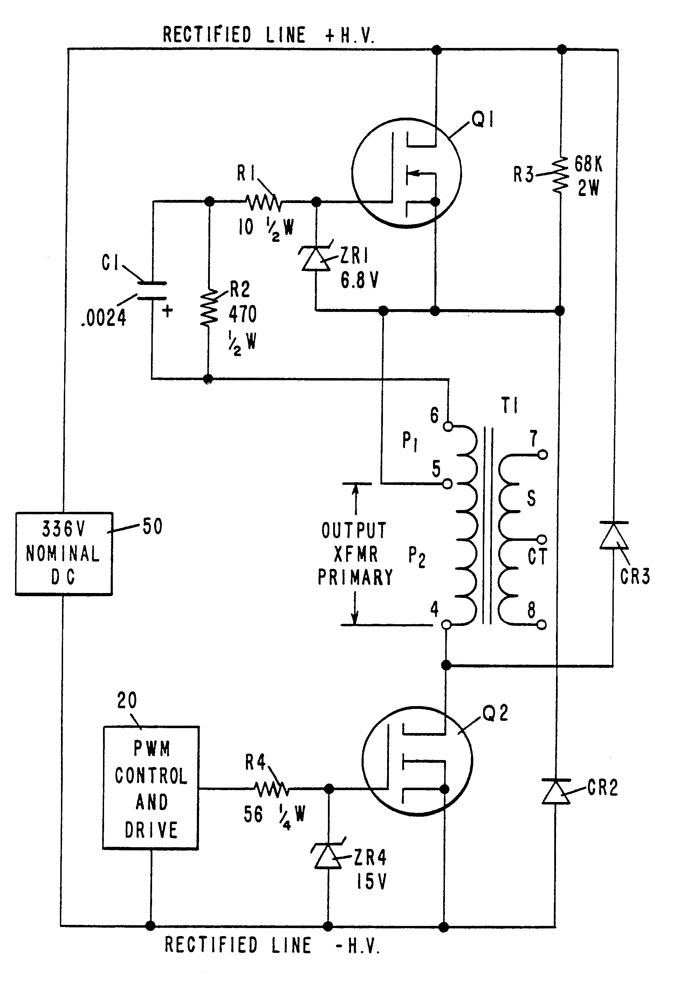

### Brief Description of the Drawing

One embodiment of the invention will now be described by way of example with reference to the accompanying drawing which is a schematic circuit diagram of a DC to DC converter according to the invention.

### Best Mode for Carrying Out the Invention

Referring to the drawing, the transformer T1 is comprised of a primary winding having a bootstrap section $P_1$ extending between terminaly 5 and 6 and a main primary winding section $P_2$ extending between terminals 4 and 5. Terminal 5 effectively taps the primary winding into two sections. The transformer T1 has a secondary winding S which is generally centertapped and connected to a rectifying load, which load is not shown for purposes of simplicity. An electronic switch Q1 connects one primary winding of the transformer, at terminal 5, to the source of rectified voltage appearing on the positive voltage line from the DC power supply source 50. Switch Q1 is an N-channel enhancement MOS device. The gate of switch Q1 is connected serially to the primary winding section $P_1$ via a resistance R1 and a capacitance C1, with a resistor R2 connected in parallel across capacitor C1. The gate of Q1 is connected to terminal 5 of the primary winding of transformer T1 by a Zener diode ZR1, which diode in the preferred embodiment has an avalanche voltage of 6.8 volts. A resistor R3 is connected across the source and drain terminals of the switch Q1. A second electronic switch Q2, which is also an MOS device, has its gate connected by means of a resistor R4 to the output of a pulse width modulation control and drive circuit 20. The gate of switch Q2 is also connected by means of a Zener diode ZR4 to the negative voltage line from the power supply source 50. The switch Q2 connects the terminal 4 of the primary winding to the negative voltage line when the gate voltage turns the switch Q2 on. A diode CR2 serves to clamp the primary transformer terminal 5 to the negative voltage line. A diode CR3 serves to clamp the transformer terminal 4 to the positive voltage line.

In operation, at the start of each «on» period of the converter, the pulse width modulator control 20 turns Q2 on. At this instant, Q1's output capacitance $C_{OSS}$ is essentially discharged, placing nearly all of the supply voltage across the primary winding section P2 of transformer T1. The extra turns comprising the bootstrap winding appearing between terminals 5 and 6 of the primary are designed to develop approximately 12 to 14 volts, while C1 is selected to be larger than the input capacitance $C_{1SS}$ of Q1. Consequently, the input capacitance $C_{1SS}$ is almost instantaneously charged to a voltage above Q1's threshold voltage, turning Q1 on. Zener diode ZR1 limits the gate voltage on Q1 to a safe value while the resistors R1 and R2 limit the amount of current that may flow through the Zener diode ZR1. The leakage inductance in transformer T1 will be adequate to delay the appearance of reflected loads in the primary until after switch Q1 has been turned on. When Q1 is turned on, the presence of the primary voltage keeps Q1 turned on until switch Q2 is switched off. At the end of the «on» time, as determined by the pulse width modulating control and drive circuitry 20, switch Q2 is turned off. At this time, stored energy in transformer T1 causes a voltage reversal at terminals 4, 5 and 6. Momentarily, this voltage is clamped at 1 or 2 volts while core reset current flows through diode CR3 and switch Q1. This interval ends as soon as Q1's voltage $V_{GS}$ between the gate and source drops below the turn-on threshold voltage $V_{TH}$. The stored charge on capacitor C1 contributes to fast reversal of the voltage $V_{GS}$. After Q1 turns off, the induced voltage across transformer T1 rises to the supply voltage.

Capacitors (not shown) associated with the supply voltage store the energy from transformer T1 received through the conduction of diodes CR2 and CR3. The rest period is approximately equal to the preceding «on» time of the converter. During reset time, the transformer T1 induced voltage causes a reversed current to flow through Zener diode ZR1 and the combination of capacitor C1 and resistor R2, thereby charging C1. At the end of core reset time, the transformer T1 induced voltage collapses to zero and the charge on capacitor C1 transfers to the gate source capacitance $C_{GS}$ to effect switch Q1 turn-on. This turn-on occurs during the converter «off» time while switch Q2 is held off. This turn-on time is important in that it discharges Q1's output capacitance $C_{OSS}$ and increases the effective value of $C_{OSS}$ as $V_{DS}$ reduces, $V_{DS}$ being the voltage across the drain and source of Q1. These two conditions contribute to the subsequent turn-on of Q1 at the next converter on time. The function of resistor R3 is to keep Q1 $C_{OSS}$ discharged after the charge on Q1 decays and allows Q1 to turn off.

In the preferred embodiment of the invention, switches Q1 and Q2 are IRF 730 devices. The primary section $P_2$ transformer $T_1$ has 60 turns and the bootstrap section $P_1$ has 4 turns. The nominal voltage from the power supply 50 appearing between the high and low rails is 336 volts D.C.

From the foregoing description, it can be readily seen that there is described a DC to DC converter in which an additional winding on the power transformer is used to drive the switching transistor Q1 of the two-switch converter, thereby eliminating the need of a separate transformer drive means for the transistor Q1.

## Claims

1. A DC to DC converter including a transformer (T1) having a primary winding (P1, P2) and a secondary winding (S), said primary winding having a first end (6), a second end (4) and a tap (5) so as to form a first primary section (P1) between said first end and said tap and a second primary section (P2) between said second end and said tap, a DC power supply (50) having a first output side and a second output side, and first electronic switch means (Q2) responsive to a control signal for periodically connecting said second end (4) of said primary winding to said second output side of said power supply (50), characterized by second electronic switch means (Q1) for periodically connecting said tap (5) to said first output side of said power supply, control means (ZR1, R1, R2, C1) connected across said first primary section (P1) for periodically activating said second switch means (Q1) in response to the potential developed across said first primary section, said second primary section (P2) having a number of winding turns substantially greater than the number of winding turns of said first primary section (P1), first rectifying means (CR3) serving to clamp said second end (4) of said primary winding (P1, P2) to said first output side of said power supply (50), and second rectifying means (CR2) serving to clamp said tap (5) to said second output side of said power supply.

2. A DC to DC converter according to claim 1, characterized in that said first and second electronic switch means (Q2, Q1) are each formed by an MOS device having drain, source and gate electrodes, and in that said control means comprises capacitor means (C1) and first resistor means (R1) connected in series between the gate electrode of said second electronic switch means (Q1) and said first end (6) of said primary winding (P1, P2), second resistor means (R2) connected across said capacitor means (C1), and a Zener diode (ZR1) connected between said tap (5) and the gate electrode of said second electronic switch means (Q1).

3. A DC to DC converter according to either claim 1 or claim 2, characterized by a second Zener diode (ZR4) connected between the gate electrode of said first electronic switch means (Q2) and said second output side of said power supply (50).

## Patentansprüche

1. Gleichspannungs-/Gleichspannungs-Wandler mit einem Transformator (T1), der aufweist: eine Primärwicklung (P1, P2) und eine Sekundärwicklung (S), wobei die Primärwicklung ein erstes Ende (6), ein zweites Ende (4) und einen Abgriff (5) aufweist, um einen ersten Primärabschnitt (P1) zwischen dem ersten Ende und dem Abgriff und einen zweiten Primärabschnitt (P2) zwischen dem zweiten Ende und dem Abgriff zu bilden, eine Gleichspannungsversorgung (50) mit einer ersten Ausgangsseite und einer zweiten Ausgangsseite und einer ersten elektronischen Schaltvorrichtung (Q2), die auf ein Steuersignal zum periodischen Verbinden des zweiten Endes (4) der Primärwicklung mit der zweiten Ausgangsseite der Spannungsversorgung (50) anspricht, gekennzeichnet durch eine zweite elektronische Schaltvorrichtung (Q1) zum periodischen Verbinden des Abgriffs (5) mit der ersten Ausgangsseite der Spannungsversorgung, Steuervorrichtungen (ZR1, R1, R2, C1), die über den ersten Primärabschnitt (P1) geschaltet sind zum periodischen Aktivieren der zweiten Schaltvorrichtung (Q1) unter Ansprechen auf das über den ersten Primärabschnitt entwickelte Potential, wobei der zweite Primärabschnitt (P2) eine Windungszahl besitzt, die wesentlich größer ist als die Windungszahl des ersten Primärabschnitts (P1), eine erste Gleichrichtervorrichtung (CR3), die dazu dient, das zweite Ende (4) der Primärwicklung (P1, P2) an die erste Ausgangsseite der Spannungsversorgung (50) zu klemmen, und eine zweite Gleichrichtervorrichtung (CR2), die dazu dient, den Abgriff (5) an die zweite Ausgangsseite der Spannungsversorgung zu klemmen.

2. Gleichspannungs-/Gleichspannungs-Wandler gemäß Anspruch 1, dadurch gekennzeichnet, daß die erste und zweite elektronische Schaltvorrichtung (Q2, Q1) jeweils durch eine MOS-Vorrichtung gebildet werden, mit Drain-, Source- und Gateelektroden, und daß die Steuervorrichtungen eine Kondensatorvorrichtung (C1) und eine erste Widerstandsvorrichtung (R1), die in Reihe zwischen die Gateelektrode der zweiten elektronischen Schaltvorrichtung (Q1) und dem ersten Ende (6) der Primärwicklung (P1, P2) geschaltet sind, eine zweite Widerstandsvorrichtung (R2), die über die Kondensatorvorrichtung (C1) geschaltet ist und eine Zenerdiode (ZR1) aufweisen, die zwischen den Abgriff (5) und die Gateelektrode der zweiten elektronischen Schaltvorrichtung (Q1) gelegt ist.

3. Gleichspannungs-/Gleichspannungswandler nach Anspruch 1 oder Anspruch 2, gekennzeichnet durch eine zweite Zenerdiode (ZR1), die zwischen die Gateelektrode der ersten elektronischen Schaltvorrichtung (2) und die zweite Ausgangsseite der Spannungsversorgung (50) geschaltet ist.

**Revendications**

1. Convertisseur continu-continu comprenant un transformateur (T1) ayant un enroulement primaire (P1, P2) et un enroulement secondaire (S), ledit enroulement primaire ayant une première extrémité (6), une seconde extrémité (4) et une prise (5) afin de former une première section primaire (P1) entre ladite première extrémité et ladite prise et une seconde section primaire (P2) entre ladite seconde extrémité et ladite prise, une alimentation (50) en énergie à courant continu ayant un premier côté de sortie et un second côté de sortie, et un premier moyen électronique de commutation (Q2) qui, en réponse à un signal de commande, connecte périodiquement ladite seconde extrémité (4) dudit enroulement primaire audit second côté de sortie de ladite alimentation en énergie (50), caractérisé par un second moyen électronique de commutation (Q1) destiné à connecter périodiquement ladite prise (5) sur ledit premier côté de sortie de ladite alimentation en énergie, des moyens de commande (ZR1, R1, R2, C1) connectés aux bornes de ladite première section primaire (P1) pour activer périodiquement lesdits seconds moyens de commutation (Q1) en fonction du potentiel développé aux bornes de ladite première section primaire, ladite seconde section primaire (P2) ayant un nombre de spires d'enroulement sensiblement supérieur au nombre de spires d'enroulement de ladite première section primaire (P1), des premiers moyens redresseurs (CR3) servant à bloquer ladite seconde extrémité (4) dudit enroulement primaire (P1, P2) sur ledit premier côté de sortie de ladite alimentation en énergie (50), et des seconds moyens redresseurs (CR2) servant à bloquer ladite prise (5) sur ledit second côté de sortie de ladite alimentation en énergie.

2. Convertisseur continu-continu selon la revendication 1, caractérisé en ce que lesdits premier et second moyens électroniques de communication (Q2, Q1) sont formés chacun d'un dispositif MOS ayant des électrodes de drain, de source et de grille, et en ce que lesdits moyens de commande comprennent un moyen à condensateur (C1) et un premier moyen à résistance (R1) connectés en série entre l'électrode de grille dudit second moyen électronique de commutation (Q1) et ladite première extrémité (6) dudit enroulement primaire (P1, P2), un second moyen à résistance (R2) connecté aux bornes dudit moyen à condensateur (C1), et une diode de Zener (ZR1) connectée entre ladite prise (5) et l'électrode de grille dudit second moyen électronique de commutation (Q1).

3. Convertisseur continu-continu selon la revendication 3 ou la revendication 2, caractérisé par une seconde diode de Zener (ZR4) connectée entre l'électrode de grille dudit premier moyen électronique de commutation (Q2) et ledit second côté de sortie de ladite alimentation en énergie (50).

RECTIFIED LINE + H.V.

Q1

R1
10 ½W

R3 68K
2W

C1
.0024

ZR1
6.8V

R2
470
½W

336V
NOMINAL
DC

50

T1

6
P1
5

7
S

CT

OUTPUT
XFMR
PRIMARY

P2

4

8

CR3

20

PWM
CONTROL
AND
DRIVE

R4
56 ¼W

Q2

CR2

ZR4
15V

RECTIFIED LINE - H.V.